(19) **Europäisches Patentamt**
**European Patent Office**
**Office européen des brevets**

(11) **EP 2 133 766 A1**

(12) **EUROPÄISCHE PATENTANMELDUNG**

(43) Veröffentlichungstag:
**16.12.2009 Patentblatt 2009/51**

(51) Int Cl.:
***G05B 19/418*** *(2006.01)*

(21) Anmeldenummer: **09007571.4**

(22) Anmeldetag: **08.06.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.06.2008 DE 102008032971**

(71) Anmelder:
• **Harms + Wende GmbH & Co. KG**
  **21079 Hamburg (DE)**
• **Hochschule Karlsruhe**
  **Technik und Wirtschaft**
  **76133 Karlsruhe (DE)**

(72) Erfinder:
• **Link, Norbert**
  **76187 Karlsruhe (DE)**
• **Peschl, Michael**
  **21079 Hamburg (DE)**

(74) Vertreter: **Harlfinger, Jan Philipp**
**Glawe - Delfs - Moll**
**Patent- und Rechtsanwälte**
**Rothenbaumchaussee 58**
**D-20148 Hamburg (DE)**

(54) **Bearbeitungs- und/oder Fertigungsverfahren und Vorrichtung zur Durchführung desselben**

(57) Das Bearbeitungs- und/oder Fertigungsverfahren und die Vorrichtung, bei denen mit einer Vorrichtung Prozessergebnisgrößen durch Einstellen einer Prozessmethode mit ausgewählten Prozessparametern angestrebt werden, zeichnen sich dadurch aus, dass innerhalb eines vorgegebenen Bereichs von Prozessparametern die mit der Vorrichtung erreichten Prozessergebnisgrößen für mehrere Sätze von Werten der Prozessparameter bestimmt und gespeichert werden und dass zur Bearbeitung und/oder Fertigung Prozesszielgrößen in die Vorrichtung eingegeben werden, aufgrund derer mithilfe der gespeicherten Daten Prozessparameter zum Erreichen der Prozesszielgrößen bestimmt werden und mit diesen Parametern die Bearbeitung und/oder Fertigung durchgeführt wird.

FIGUR 3

**Beschreibung**

Die Erfindung betrifft ein Bearbeitungs- und/ oder Fertigungsverfahren, bei dem mit einer Vorrichtung Prozessergebnisgrößen durch Einstellen einer Prozessmethode mit ausgewählten Prozessparametern angestrebt werden. Die Erfindung betrifft weiter eine Vorrichtung zur Durchführung des Verfahrens.

Zur Erreichung des Bearbeitungs- und/oder Fertigungsziels, das mit einer Vorrichtung erreicht werden soll, müssen Prozessparameter eingestellt werden. Diese werden dadurch bestimmt, dass man durch Versuche ermittelt, mit welchem Prozessparametern das gewünschte Prozessergebnis optimal erreicht werden kann. Die Vorrichtung kann dann entsprechend eingestellt werden, um das Bearbeitungs- und/oder Fertigungsziel zu erreichen.

Die Bearbeitung und/oder Fertigung von Gütern ist immer mehr der Forderung nach individualisierten Produkten unterworfen. Ferner soll die Fertigung möglichst mit unterschiedlichen Qualitäten von Ausgangsmaterialien eine immer gleichbleibende Produktqualität erzeugen. In anderen Fällen sollen wegen verhältnismäßig kleiner Stückzahlen mit derselben Vorrichtung unterschiedliche Erzeugnisse bearbeitet oder gefertigt werden. Dies ist mit klassischen Bearbeitungs- oder Fertigungsvorrichtungen, welche für eine feste Aufgabe eingestellt und so für eine möglichst große Produktionsstückzahl verwendet werden, nicht möglich.

Die Aufgabe der Erfindung besteht in der Schaffung eines Verfahrens und einer Vorrichtung, mit dem bzw. der auch unter variierenden Bedingungen und Zielsetzungen ein gewünschtes Bearbeitungs- oder Fertigungsziel optimal erreicht werden kann.

Eine erfindungsgemäße Lösung besteht aus einem Verfahren bei dem innerhalb eines vorgegebenen Bereichs von Prozessparametern die mit der Vorrichtung erreichten Prozessergebnisgrößen für mehrere Sätze von Werten der Prozessparameter bestimmt und gespeichert werden und dass zur Bearbeitung und/oder Fertigung Prozesszielgrößen in die Vorrichtung eingegeben werden, aufgrund derer mithilfe der gespeicherten Daten Prozessparameter zum Erreichen der Prozesszielgrößen bestimmt werden und mit diesen Parametern die Bearbeitung und/oder Fertigung durchgeführt wird.

Eine weitere Lösung besteht aus einer Vorrichtung zur Durchführung des Verfahrens.

Es werden also nicht wie beim Stand der Technik optimale Prozessparameter zur Bestimmung eines gewünschten Ziels bestimmt und die Vorrichtung entsprechend eingestellt. Vielmehr ist es nur erforderlich, die Prozesszielgrößen einzugeben, aus denen dann mithilfe des Verfahrens automatisch die geeigneten Prozessparameter bestimmt werden, mit denen dann das Verfahren durchgeführt wird.

Die geforderte Flexibilität wird also dadurch erreicht, dass die Vorrichtung, welche für einen Bearbeitungs- oder Fertigungsvorgang oder Teilvorgang (im Folgenden "Prozess" genannt) zuständig ist, diesen unter variierenden Bedingungen und Zielsetzungen so durchführen kann, dass das gewünschte Ergebnis optimal erreicht wird. Die Vorrichtung kann also ihre Einstellungen selbsttätig so verändern bzw. wählen, dass diese Forderung erfüllt wird.

Die Vorrichtung führt aufgrund ihrer Einstellungen einen Prozess durch, welcher das gewünschte Ergebnis erzielen soll. Wie der Prozess geführt wird, bestimmt zusammen mit den Anfangs- und Randbedingungen, unter welchen der Prozess durchgeführt wird, das Prozessergebnis. Die Prozessführung (im Folgenden "Prozessmethode" genannt) unterliegt dem Einfluss der Vorrichtung, während die Anfangs- und Randbedingungen des Prozesses (im Folgenden als "Prozessbedingungen" bezeichnet) von außen gegeben und durch die Vorrichtung nicht verändert werden können. Die gewünschten Eigenschaften des aus dem Prozess entstehenden Ergebnisses werden als "Prozessziele" bezeichnet und sind i. A. ebenfalls von außen vorgegeben. Die Prozessbedingungen definieren zusammen mit den Prozesszielen die "Prozessaufgabe".

Die wesentliche Leistung, welche also für die Lösung der gestellten Aufgabe benötigt wird, ist die automatische Ermittlung einer geeigneten und nach bestimmten Kriterien optimalen Prozessmethode zu einer gegebenen Prozessaufgabe.

Die gespeicherten Werte, aufgrund derer die Prozessparameter bestimmt werden, sind durch mit der Vorrichtung vorgenommene Bearbeitungs- oder Fertigungsvorgänge festgestellt. Zusätzlich kann vorgesehen werden, dass simulierte Werte bestimmt und gespeichert werden.

Die Daten werden einer vorteilhaften Ausführungsform in Tabellen gespeichert.

Einer weiteren vorteilhaften Ausführungsform ist vorgesehen, dass die Prozessparameter Softwareelemente beinhalten.

Aufgrund der gespeicherten Werte wird nicht immer ein eindeutiger Satz von Prozessparametern festgestellt werden. Es wird daher in zweckmäßiger Weise bei einer vorteilhaften Ausführungsform vorgesehen, dass bei Feststellung mehrerer Prozessparametersätze, die zum gleichen Ergebnis führen, weitere Prozessparameter wie zum Beispiel Kosten aufgrund der gespeicherten Daten berücksichtigt werden.

Nach einer anderen vorteilhaften Ausführungsform wird man vorsehen, dass bei Feststellung mehrerer Prozessparametersätze, die zum gleichen Ergebnis führen, zur Eingabe weiterer Prozessparameter wie zum Beispiel Kosten, insbesondere zur Optimierung derselben aufgefordert wird.

Andererseits ist es auch möglich, dass bei Feststellung mehrerer Prozessparametersätze, die zum gleichen Ergebnis führen, ein Parameterwertersatz aufgrund heuristischer Methoden ausgewählt wird.

Da die Werte durch eine endliche Anzahl von Messungen mit bestimmten Prozessparametern festgestellt werden, liegen nicht für alle Prozessparameter auswertbare Werte vor. In vorteilhafter Weise wird man daher vorsehen, dass zwischen den bestimmten und gespeicherten Daten interpoliert wird.

Zur Überprüfung der Vorgänge, zur Qualitätskontrolle und um allmähliche Änderungen bei den Vorrichtungsparametern (z.B. Abnutzung von Schweißelektroden) zu berücksichtigen, kann vorgesehen werden, dass bei mindestens einigen Bearbeitungs- und/oder Fertigungsvorgängen die Prozessergebnisgrößen bestimmt und zusammen mit den Prozesszielgrößen und Prozessparametern gespeichert werden.

Eine erfindungsgemäße Vorrichtung zeichnet sich dadurch aus, dass sie eine Speichereinrichtung für die gespeicherten Daten, Einrichtungen zum Eingeben der Prozesszielgrößen, einen Rechner zum Bestimmen der Prozessparameter und Einrichtungen zum Einstellen derselben aufweist.

Für das Verfahren ist es erforderlich, eine Transformationsvorschrift für die Menge möglicher Prozessaufgaben einer Vorrichtung auf Prozessmethoden zu realisieren, welche die jeweils zugehörige Aufgabe erfüllen und gewisse weitere Kriterien optimal erfüllen. Gegenstand der Erfindung ist das Erstellen und Auffinden einer solchen Transformationsvorschrift.

Hierfür wird sowohl die Prozessaufgabe als auch die Prozessmethode durch eine Menge von zahlenmäßigen Ausprägungen charakteristischer Größen dargestellt. Für die Prozessaufgabe wären dies die Prozessmerkmale, deren spezifische Ausprägungen eine Aufgabe beschreiben. Für die Prozessmethoden können diese Ausprägungen von Parametern sein, welche die Prozessführung der Maschine steuern, aber auch Verweise auf Softwarecode-Fragmente für die Ablaufsteuerung des Prozesses. Diese Größen können als Vektoren dargestellt werden. Die Prozessaufgabe wird also als Prozessaufgabenvektor

$$\vec{r}_{PA} = \left[\vec{r}_{PB}, \vec{r}_{PZ}\right]^T, \quad \vec{r}_{PA} \in \Re^M$$

dargestellt, der seinerseits einen Prozessbedingungsvektor

$$\vec{r}_{PB} \in \Re^J$$

und einen Prozesszielevektor

$$\vec{r}_{PZ} \in \Re^K$$

enthält. Die Prozessmethode wird entsprechend durch einen Prozessmethodenvektor

$$\vec{r}_{PM} \in \Re^N$$

dargestellt, der z.B. die Parameter einer Prozessführung oder Zeiger auf Steuerungssoftwarecode enthalten kann.

Die Transformationsvorschrift ist dann eine Abbildungsfunktion

$$\vec{r}_{PM} = f(\vec{r}_{PA}), \quad f : \Re^M \rightarrow \Re^N.$$

Die Erfindung zeigt einen Weg, wie diese Transformationsvorschrift automatisch gefunden werden kann.

Für eine funktionale methodenbezogene Prozesswissensrepräsentation ist der Ausgangspunkt das Vorhandensein experimenteller Befunde in dem entsprechenden Prozessfachgebiet. Die experimentellen Befunde enthalten Erkenntnisse über das Verhalten des betrachteten Prozesses. Durch die Erfindung wird ein Weg aufgezeigt, wie aus diesen Befunden automatisch eine methodenbezogene Prozesswissensrepräsentation gewonnen wird, von der dann die gewünschte Aufgaben-zu-Methoden-Transformation abgeleitet wird.

Experimente zum Verständnis von Prozessen erfolgen in der Regel derart, dass im Labor die Bedingungen, unter denen der Prozess ablaufen soll, (Randbedingungen und Ausgangsbedingungen) hergestellt werden und der Prozess daraufhin abläuft, wobei er mit einer bestimmten Prozessmethode geführt wird. Am Ende des Prozesses wird der erreichte Endzustand analysiert und durch bestimmte Qualitätsgrößen charakterisiert. Üblicherweise wird eine große Menge solcher Versuche unter verschiedenen Bedingungen durchgeführt, um den betrachteten Prozess zu verstehen. Anstatt echter, physischer Experimente kommen auch Versuche auf der Grundlage numerischer Simulation des Prozesses zum Einsatz, wodurch eine große Menge von Versuchen und Ergebnissen erzeugt werden kann.

Für die spätere Prozessanwendung ist es interessant, welche Prozessqualitätsgrößen sich bei bestimmten Prozessmethoden unter bestimmten Anfangs- und Randbedingungen ergeben. Diejenigen Prozessqualitätsgrößen

$$\vec{r}_{PQ} \in \Re^K,$$

die vom Prozess erzielt werden sollen, sind identisch mit den oben definierten Prozesszielgrößen

$$\vec{r}_{PZ} \in \mathfrak{R}^{K}.$$

Experimente mit N Versuchen liefern eine Menge von N Tripeln aus Prozessbedingungen, Prozessmethoden und daraus resultierenden Prozesszielgrößen:

$$\left\{ {}^{i}\vec{r}_{PB}, {}^{i}\vec{r}_{PM}, {}^{i}\vec{r}_{PZ} \right\}_{i=1}^{N}.$$

Aus diesen Tripeln wird eine Vektorabbildungsfunktion als Abstraktion des in den experimentellen Befunden dargestellten Prozesswissens geschätzt, welche die Tripel möglichst gut approximiert:

$$\vec{r}_{PZ} = g(\vec{r}_{PB}, \vec{r}_{PM}), \quad g : \mathfrak{R}^{J+N} \to \mathfrak{R}^{K}.$$

Werden die Vektoren

$$\vec{r}_{PB}, \vec{r}_{PM}$$

zu einem "Prozessexperimentvektor"

$$\vec{r}_{PE} \in \mathfrak{R}^{J+N}$$

zusammengefasst, wird also nach einer Abbildung

$$\vec{r}_{PZ} = g(\vec{r}_{PE}), \quad g : \mathfrak{R}^{J+N} \to \mathfrak{R}^{K}$$

aufgrund der Menge der experimentellen Paare

$$\left\{ {}^{i}\vec{r}_{PE}, {}^{i}\vec{r}_{PZ} \right\}_{i=1}^{N}$$

gesucht. Eine mögliche Ausführung besteht in der Anwendung der bekannten Methode der Support-Vektor-Regression, aus welcher sich die Abbildung

$$g(\vec{r}_{PB}, \vec{r}_{PM})$$

als lineare Superposition von Kernel-Funktionen ergibt:

$$g(\vec{r}_{PE}) = \sum_{j} \lambda_{j} \vec{K}(\vec{r}_{PE}, {}^{j}\vec{r}_{PE}).$$

Auch andere Ausführungen der automatischen Ermittlung der Abbildungsfunktion basierend auf anderen Methoden der Funktionenapproximation wie z.B. Neuronale Netze, sind möglich.

Zur Erfindung gehört als weiterer Bestandteil der angestrebten Aufgaben-zu-Methoden-Transformation die Nutzung der oben dargestellten funktionalen, prozessbezogenen Wissensrepräsentation die folgende Vorgehensweise.

Wie bereits eingangs dargestellt, wird die vom Prozess zu erledigende Aufgabe durch einen Prozessaufgabenvektor

$$\vec{r}_{PA} = [\vec{r}_{PB}, \vec{r}_{PZ}]^{T}$$

spezifiziert, wobei die Prozessvorrichtung selbsttätig eine hierfür geeignete Methode

$$\vec{r}_{PM}$$

zu finden hat. Die gemäß Vorstehendem automatisch gefundene Abbildungsfunktion

$$\vec{r}_{PZ} = g(\vec{r}_{PB}, \vec{r}_{PM})$$

beschreibt die Werte des Prozesszielvektors in Abhängigkeit von den Prozessbedingungen und -methoden. Wird nun eine dedizierte Aufgabe durch den Vektor

$$\tilde{\vec{r}}_{PA} = [\tilde{\vec{r}}_{PB}, \tilde{\vec{r}}_{PZ}]^{T}$$

gegeben, so sind die Prozessmethoden, welche die Aufgabe lösen, die Lösungen der Gleichung

$$\widetilde{\vec{r}}_{PZ} = g\left(\widetilde{\widetilde{\vec{r}}}_{PB}, \vec{r}_{PM}\right).$$

Dies entspricht dem Schnitt der Abbildungsfunktion über dem Unterraum der Prozessmethodenvektoren

$$\vec{r}_{PM}$$

mit dem konstanten Vektor

$$\widetilde{\widetilde{\vec{r}}}_{PZ}$$

und wird als Niveaumenge der Abbildungsfunktion bezüglich

$$\vec{r}_{PZ} = \widetilde{\widetilde{\vec{r}}}_{PZ}$$

bezeichnet. Diese Niveaumenge gibt die Menge der Methoden an, welche die gestellte Aufgabe löst.

Die Niveaumenge wird durch die Nullstellen von

$$\widetilde{\widetilde{\vec{r}}}_{PZ} - g\left(\widetilde{\widetilde{\vec{r}}}_{PB}, \vec{r}_{PM}\right)$$

definiert. Werden als Kernelfunktionen Polynome der Ordnung drei oder kleiner benutzt, kann die Lösung in bekannter, geschlossener analytischer Form angegeben werden. In allen anderen Fällen müssen nummerische Verfahren zur Bestimmung der Nulldurchgänge benutzt werden, die aus der Literatur bekannt sind.

Besteht die Niveaumenge aus mehr als einem Element, d.h., existieren mehr als eine Lösung, kann nach einer Lösung gesucht werden, welche in einem weiteren Sinne optimal ist. Hierfür können die Prozessgrößen gemäß ihren Kosten bewertet und das Minimum der resultierenden Kostenfunktion mit üblichen Optimierungsmethoden gesucht werden. Im Falle mehrfacher Minima ist schließlich ein heuristisches Verfahren anzuwenden, welches aus der Menge gleichwertiger Lösungen eine spezifische Lösung auswählt.

Die Methode der funktionalen Repräsentation stützt sich auf experimentelle Daten ab und hat daher nur in Bereichen Gültigkeit, in denen die Daten ausreichend dicht sind, um die Schwankungen der zugrunde liegenden Funktion ausreichend darzustellen. Es ist daher zweckmäßig, Hüllen im Methodenraum um die experimentellen Daten herum zu bilden, innerhalb derer die Niveaumenge beschränkt wird.

Des Weiteren können experimentelle Befunde ergeben, dass der gewünschte Prozess unter bestimmten Prozessführungen (Methoden) überhaupt nicht abläuft. Die Trennflächen zwischen undurchführbaren und machbaren Methoden kann wiederum anhand der experimentellen Daten automatisch modelliert werden (z.B. durch eine Zweiklassen-Supportvektormaschine oder andere Klassifikatoren). Die Niveaumenge wird dann ebenfalls auf die "machbare" Seite der Trennfläche beschränkt.

Im Unterschied zu den bestehenden Lösungsansätzen einer flexiblen Fertigung wird also die Flexibilität und Anpassbarkeit der Fertigung dadurch erreicht, dass Fertigungsvorrichtungen, die für eine Aufgabenklasse (Handhabung, dedizierte Verbindungs- oder Verformungstechniken, usw.) spezialisiert sind, unterschiedliche Aufgaben aus dieser Klasse erfassen, verstehen und den zugehörigen technischen Prozess autonom mit der für die Aufgabe am besten geeigneten Methode durchführen. Eine solche Fertigungsvorrichtung wird im Folgenden als Experton bezeichnet.

Die Lösung besteht also darin, dass ein Experton über Komponenten verfugt, welche ihm erlauben, eine für seine Aufgabenklasse spezifizierte Aufgabe zu verstehen und daraus eine geeignete oder optimale Prozessführungsmethode abzuleiten, welche auf der zum Experton gehörigen Prozessführungsapparatur ausgeführt wird. Die Komponente zur Transformation der Aufgabenbeschreibung in eine Prozessführungsmethode enthalt dabei Repräsentationen des vorhandenen Wissens über die Aufgaben und die technischen Prozesse, welche für die Aufgabenklasse des Expertons zur Verfügung stehen (Domänenwissen) und daher, für welche Aufgaben welche geeigneten Parameter für die Durchführung zu wählen sind (Methodenwissen). Die Transformationskomponente verfügt ferner über Prozesse zur Nutzung des Wissens, um die Transformation zu bewerkstelligen. Damit ist ein Experton in der Lage, mit seinem Prozess (z.B. Widerstandspunktschweißen) Aufgaben unterschiedlicher Art (z.B. unterschiedliche Materialien und Blechdicken) autonom aufgrund der Aufgabenbeschreibung (welche z.B. u.a. die Materialbezeichnungen und Blechdickenangaben enthalt) durch jeweils geeignete Wahl der Prozessparameter (z.B. Schweißstrom und Schweißzeit) zu erledigen.

Eine Zusammenstellung solcher Expertonen kann komplexere Aufgaben ebenso flexibel bewältigen, wenn die in der Zusammenstellung enthaltenen Expertonen koordiniert zusammenarbeiten. Hierzu ist wiederum Wissen erforderlich, wie die Gesamtaufgabe auf Expertonen aufgeteilt wird und die Kooperation der Expertonen zu erfolgen hat, um die Gesamtaufgabe zu lösen. Eine solche Zusammenstellung, die über eine Komponente verfügt, welche die Gesamtaufgabe in Teilaufgaben für die enthaltenen Expertonen transformiert, stellt wiederum ein Experton dar, dessen Prozessbearbeitungsmethode durch die abgeleiteten Aufgabenbeschreibungen für seine Komponenten-Expertonen dargestellt wird. Expertonen bilden daher eine Hierarchie, mit welcher die Komplexität von Fertigungsaufgaben aufgeteilt und beherrscht werden kann.

Die Autonomie der Expertonen in der Prozessdurchführung verlangt in vielen Fallen einen Nachweis der erzielten Qualität. Daher besitzen Expertonen im Regelfall eine Komponente zur Schätzung der erreichten Qualität aus den Größen, welche von der Prozessführungsapparatur oder von zusätzlichen Sensoren während oder unmittelbar nach der Prozessdurchführung erzeugt werden. Ebenso wie eine für die Aufgabe geeignete Prozessführungsmethode gefunden werden musste, muss ebenso eine für die Aufgabe geeignete Qualitätsschätzmethode autonom gefunden und schließlich ausgeführt werden. Ein Experton verfügt -im Falle einer realisierten Qualitätsschätzung- über entsprechende Komponenten.

Expertonen verfügen zur Erledigung von Aufgaben über einen Operationsmodus und ferner in der Regel für die Planung von Fertigungsanlagen, in welchen Expertonen eingesetzt werden, über einen Emulationsmodus, in welchem der physische Prozessschritt nicht ausgeführt, sondern stattdessen lediglich das erwartete Ergebnis zurück geliefert wird. Für die Planung kann ferner ein Optimierungsmodus vorhanden sein, in welchem die planende Einheit in der Aufgabenbeschreibung für das Experton Freiheitsgrade lässt, für welches das Experton die unter den übrigen Randbedingungen optimalen möglichen Werte zurück liefert. Damit wird in der Expertonenhierarchie ebenfalls die Komplexität der Optimierungsaufgabe für die Fertigung reduziert.

Für die Abbildung des Domänen- und Methodenwissens besitzt ein Experton in der Regel mehrere Komponenten je nach vorliegender Repräsentation, die zusammen das Wissenssystem des Expertons bilden. Dazu gehört ein einheitliches, formalisiertes Begriffssystem, vorzugsweise eine Ontologie, so dass eine eindeutige Kommunikation zwischen Expertonen gewährleistet und mit deren Hilfe Abbildungen zwischen Aufgaben und Prozessdurchführungsmethoden formuliert und abgerufen werden können, eine Wissensbasis, welche für bekannte Aufgaben die zughörigen Methoden enthält und liefert, Regelsysteme (entweder formuliert auf Grundlage einer Ontologie oder als Entscheidungstabellen oder Entscheidungsbaume) zur Methodenermittlung aus Aufgabenbeschreibungen, funktionale mathematische Abbildungen von numerischen Aufgabenbeschreibungen auf Methoden oder sonstige Abbildungsfunktionen, deren Ergebnisse (falls mehr als eine Abbildungsfunktion implementiert ist) mittels einer Fusionierungskomponente zu einem Gesamtergebnis verdichtet werden. Ebensolche Komponenten sind vorzugsweise für die Findung einer Qualitätsschätzmethode vorhanden. Um den Fall abzudecken, dass mit dem durch obige Komponenten abgebildeten Wissen keine zufrieden stellende Methode für die Lösung einer gestellten Aufgabe zur Verfugung gestellt werden kann, verfügt ein Experton vorzugsweise über eine Komponente zur numerischen Simulation des Fertigungsprozesses, um durch simulierte Experimente eine Methode ausfindig zu machen. Falls eine solche Simulation für den Prozesszyklus schnell genug ist und ferner mit hinreichender Genauigkeit die tatsächlichen Prozessverläufe und - ergebnisse wiedergibt, kann sie auch zusammen mit einer Optimierungskomponente eine verlässliche Methodenfindung darstellen und die oben genannten Abbildungskomponenten ersetzen.

Die Kommunikation zwischen Expertonen erfolgt vorzugsweise durch den Austausch von Dokumenten, wobei im Operationsmodus vom Experton Aufgabenbeschreibungsdokumente empfangen und daraufhin nach erfolgter Prozessdurchführung Qualitätsergebnisdokumente an die Aufgaben sendende Einheit zurückgeliefert werden. Das Aufgabenbeschreibungsdokument enthält in maschinenlesbarer Form die Zielsetzung und die Randbedingungen sowie die geforderte Qualität der Aufgabe. Das Qualitätsergebnisdokument spiegelt -ebenfalls in maschinenlesbarer Form- die Qualitätsanforderungen mit den aufgrund der ausgeführten Qualitätsschätzmethode tatsachlich ermittelten Maßzahlen wider.

Für die Planungsphase stellt das Experton einer anfragenden Einheit ein Selbstbeschreibungsdokument zur Verfugung, welches seine Fähigkeiten und seinen Betriebstand beschreibt. Ebenfalls in der Planungsphase enthalt das Qualitätsergebnisdokument die durch den Prozess realisierbaren Aufgabenfreiheitsgrade mit den zugehörigen kostenrelevanten Prozessgrößen.

Eine weitere, vorzugsweise in Expertonen vorhandene Komponente erlernt automatisch aus der Beobachtung von Prozessaufgaben, -methoden, -verläufen und -qualitäten relevante Zusammenhänge für die Abbildung von Aufgaben auf Methoden, welche in das Wissenssystem des Expertons eingespeist werden.

Die Erfindung wird im Folgenden anhand einer vorteilhaften Ausführungsform unter Bezugnahme auf die beigefügten Zeichnungen beschrieben. Es zeigen:

Fig. 1	eine Arbeitsstelle für die Fertigung einer Rohbautür in der Automobilfertigung;

Fig. 2	die thematische Beschreibung des Arbeitsablaufs;

Fig. 3	den grundsätzlichen Aufbau eines Arbeitsvorganges auf der untersten Hierarchieebene;

Fig. 4	die Funktionalität von übergeordneten Arbeitsvorgängen;

Fig. 5 einen Überblick über die Komponenten zur Transformation von Aufgaben in Methoden; und

Fig. 6 die detaillierte Struktur einer Komponente zur Transformation von Aufgaben in Methoden.

Grundzüge von Verfahren und Vorrichtung der Erfindung sollen im Folgenden am Beispiel von Schweißungen an einer Rohbautür in der Automobilfertigung beschrieben werden. Für die Teile der entsprechend ausgebildeten Vorrichtung, die die Erfindung verwirklichen, wird dabei wie oben erwähnt die Bezeichnung "Expertonen" verwendet.

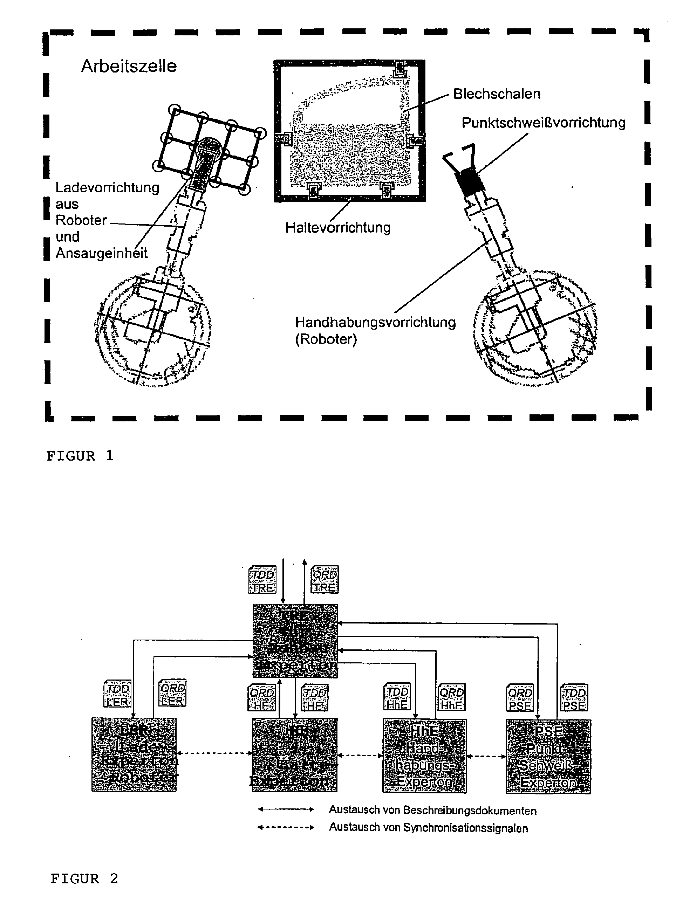

Bei der Fertigung einer Automobiltür im Karosserie-Rohbau werden zwei vorgeformte Blechschalen in einer Haltevorrichtung gegenseitig ausgerichtet und fixiert, woraufhin die beiden Schalen durch eine Reihe von Punktschweißungen verbunden werden. Eine räumliche Anordnung von Prozessdurchführungsmitteln, welche eine Aufgabe aus mehreren Elementarprozessen wie die oben beschriebene Fertigungsaufgabe übernimmt, wird im Allgemeinen als Arbeitszelle bezeichnet. Die Arbeitszelle (Fig. 1) besteht in diesem Fall aus einer Ladevorrichtung, welche die beiden Blechschalen außen ergreift und in die Haltevorrichtung einfuhrt, der Haltevorrichtung selbst, welche die Blechschalen absolut im Raum und zueinander fixiert, einer Punktschweißvorrichtung, welche mittels einer Schweißzange die Blechschalen an einem Punkt (der Kontaktstelle) zusammendrückt und welche durch Stromfluss durch die Zange über die Kontaktstelle der Blechschalen an der Kontaktstelle die Blechmaterialien kurzzeitig aufschmilzt und beim Abkühlen und Erstarren eine Verbindung zwischen den Blechschalen an der Kontaktstelle erzeugt. Die Schweißvorrichtung selbst ist wiederum an einer Handhabungsvorrichtung befestigt, welche die Zange der Schweißvorrichtung an die Stelle führt, an der eine Verbindung hergestellt werden soll. Nach der Erzeugung der vorgesehenen Reihe der Schweißpunkte sind die Blechschalen zusammengefügt, und die so entstandene Rohbautür wird für weitere Verarbeitungsschritte von der Ladevorrichtung an eine weitere Zelle weitergegeben.

Um nun flexibel Türen für verschiedene Varianten oder unter Einsatz verschiedener Materialqualitäten oder veränderter Anforderungen fertigen zu können, ohne für alle denkbaren Fälle durch zeitraubende Experimente die entsprechenden Betriebsmethoden für die beteiligten Fertigungsvorrichtungen zu erstellen (was i.A. nicht möglich ist), wird die Realisierung durch die vorgeschlagenen Expertonen vorgenommen.

Die Zelle wird dabei dargestellt durch ein Türrohbau-Experton (siehe Fig. 2), das folgende Expertonen als Prozessdurchführungsmittel enthält: ein Lade-Experton, ein Halte-Experton, ein Punktschweiß-Experton und ein Handhabungs-Experton. Die Aufgaben- und die Qualitätsergebnisbeschreibungen werden hier in Form von Dokumenten ausgetauscht: Das TDD (Task Description Document) für die Aufgabenbeschreibung und das QRD (Quality Result Document) für die Qualitätsergebnisbeschreibung. Durch den Austausch von Synchronisationssignalen (deren Erzeugung durch das Experton sowie die Reaktion des Expertons auf die Signale anderer Expertonen ebenfalls im TDD spezifiziert ist) können die Aktivitäten in der Zelle koordiniert werden. Die Synchronisation kann aber auch dadurch erreicht werden, dass die Expertonen eine atomare Aufgabe jeweils nach Erhalt eines TDD ausführen und deren Erledigung durch das QRD signalisiert wird.

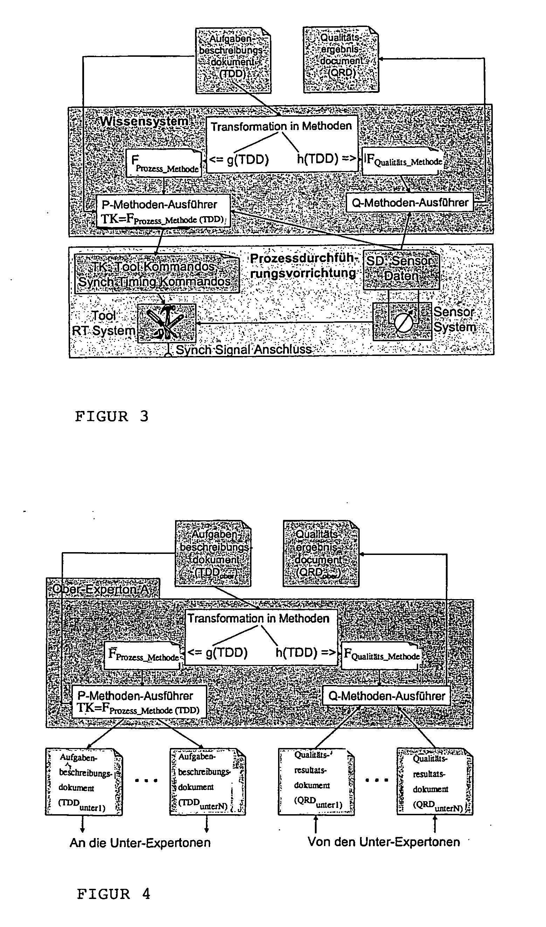

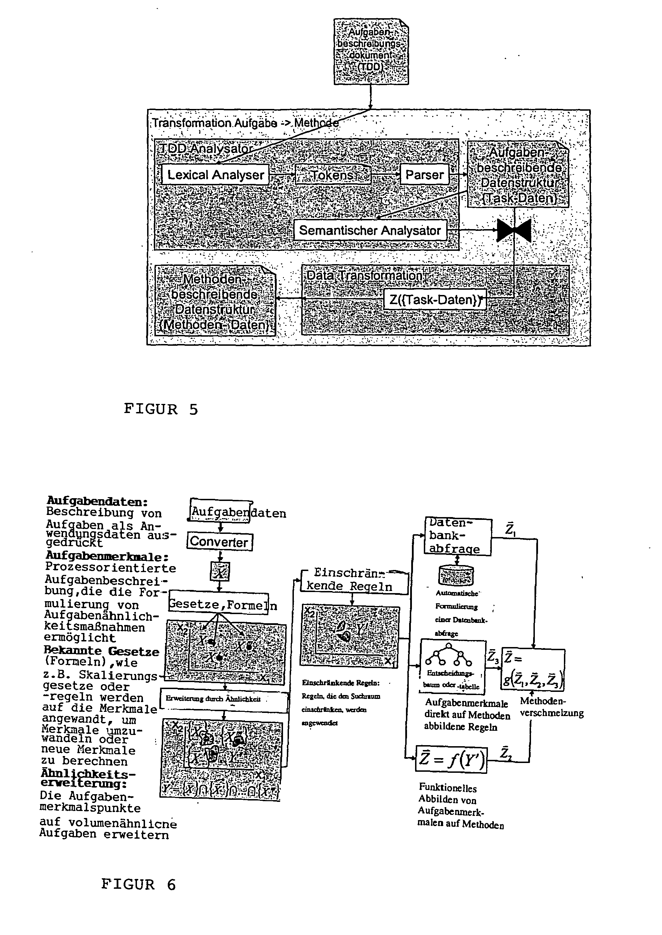

Stellvertretend soll der Aufbau und die Funktionalität des Punktschweiß-Expertons erläutert werden. Im regulären Betriebsmodus erhält das Punktschweiß-Experton eine Aufgabenbeschreibung vom Türrohbau-Experton. In diesem Dokument (vereinfachtes Beispiel in Fig. 3) sind beschrieben: Ziel der Aufgabe (hier ein Schweißpunkt zwischen zwei Blechen innerhalb einer bestimmten Zykluszeit), die erforderliche Qualität (hier: Schweißlinsendurchmesser) und die Randbedingungen (Materialien und Dicke der Bleche, Abstand vom Blechrand, verwendete Schweißelektroden, elektrische Leistungsparameter der Schweißelektronik, mechanische Parameter der Schweißzange). Dieses TDD wird zunächst lexikalisch analysiert und durch den Parser in eine Datenstruktur überführt, welche nun (im Fall der syntaktischen Integrität) die Information des TDD enthält (Fig. 5). Ferner wird gemäß Fig. 5 mithilfe der Ontologie des Expertons überprüft, ob die Beschreibung des TDD semantisch korrekt ist. Im Falle eines syntaktischen oder semantischen Fehlers wird dies im QRD zurückgemeldet und auf das nächste TDD gewartet. Im Falle der Korrektheit wird die erhaltene Datenstruktur benutzt, um gemäß Fig. 6 eine Transformation in eine Prozessführungsmethode durchzuführen. Im Falle des Widerstandspunktschweißprozesses bedeutet dies die Führung des Schweißstromes, der Schweißspannung und der Elektrodenkraft während der Schweißzeit. Die Transformation kann z.B. durch ein künstliches neuronales Netz erfolgen, welches durch Training mit einer großen repräsentativen Menge an experimentell ermittelten Aufgaben-Methoden-Paaren eine approximative Repräsentation der Transformation erlernt hat. Hierfür wird vorteilhaft die numerische Simulation des Prozesses zusammen mit einer Optimierungskomponente eingesetzt, mit welcher man in der Lage ist, die erforderliche Trainingsmenge zu erstellen. Zusätzlich wird die Datenstruktur durch Regeln (die von Experten erfragt oder statistisch aus Schweißexperimenten ermittelt wurden) verarbeitet was ebenfalls eventuell ebenfalls eine Prozessausführungsmethode liefert. Ferner wird mit der Datenstruktur eine Wissensbasis angefragt, ob zu der Aufgabe eine Prozessausführungsmethode vorhanden ist. Möglicherweise liegen also mehrere Prozessausführungsmethoden als mögliche Lösungen vor. Diese werden in einer Fusionierungskomponente entsprechend der Sicherheit der Korrektheit gewichtet zu einem einzigen Methodenergebnis verarbeitet. Letzteres wird schließlich an den Kontroller der Schweißsteuerungselektronik zur Ausführung übergeben.

Ebenso wird verfahren, um eine Qualitätsschätz- oder - messmethode zu ermitteln, welche für die Aufgabe geeignet ist, wobei von ihr die gemessenen, tatsächlichen Verläufe von Schweißstrom und -spannung sowie Elektrodenkraft und - weg verwendet werden, um die Qualität (hier den Durchmesser) des Schweißpunktes zu schätzen.

Mit diesen Fähigkeiten seines Wissenssystems wird das Schweiß-Experton in die Lage versetzt, autonom und flexibel unterschiedliche Aufgaben aus dem Bereich des Widerstandspunktschweißens zu übernehmen.

**Patentansprüche**

1. Bearbeitungs- und/oder Fertigungsverfahren, bei dem mit einer Vorrichtung Prozessergebnisgrößen durch Einstellen einer Prozessmethode mit ausgewählten Prozessparametern angestrebt werden, **dadurch gekennzeichnet, dass** innerhalb eines vorgegebenen Bereichs von Prozessparametern die mit der Vorrichtung erreichten Prozessergebnisgrößen für mehrere Sätze von Werten der Prozessparameter bestimmt und gespeichert werden und dass zur Bearbeitung und/oder Fertigung Prozesszielgrößen in die Vorrichtung eingegeben werden, aufgrund derer mithilfe der gespeicherten Daten Prozessparameter zum Erreichen der Prozesszielgrößen bestimmt werden und mit diesen Parametern die Bearbeitung und/oder Fertigung durchgeführt wird.

2. Verfahren nach Anspruch 1, **dadurch gekennzeichnet, dass** zusätzlich zur Bestimmung von mithilfe von Prozessparametern in der Vorrichtung tatsächlich erreichten Prozesszielgrößen simulierte Werte bestimmt und gespeichert werden.

3. Verfahren nach Anspruch 1 oder 2, **dadurch gekennzeichnet, dass** die Daten in Tabellen gespeichert werden.

4. Verfahren nach einem der Ansprüche 1 bis 3, **dadurch gekennzeichnet, dass** die Prozessparameter Softwareelemente beinhalten.

5. Verfahren nach einem der Ansprüche 1 bis 4, **dadurch gekennzeichnet, dass** bei Feststellung mehrerer Prozessparametersätze, die zum gleichen Ergebnis führen, weitere Prozessparameter wie zum Beispiel Kosten aufgrund der gespeicherten Daten berücksichtigt werden.

6. Verfahren nach einem der Ansprüche 1 bis 4, **dadurch gekennzeichnet, dass** bei Feststellung mehrerer Prozessparametersätze, die zum gleichen Ergebnis führen, zur Eingabe weiterer Prozessparameter wie zum Beispiel Kosten, insbesondere zur Optimierung derselben aufgefordert wird.

7. Verfahren nach einem der Ansprüche 1 bis 4, **dadurch gekennzeichnet, dass** bei Feststellung mehrerer Prozessparametersätze, die zum gleichen Ergebnis führen, ein Parameterwertersatz aufgrund heuristischer Methoden ausgewählt wird.

8. Verfahren nach einem der Ansprüche 1 bis 7, **dadurch gekennzeichnet, dass** zwischen den bestimmten und gespeicherten Daten interpoliert wird.

9. Verfahren nach einem der Ansprüche 1 bis 8, **dadurch gekennzeichnet, dass** bei mindestens einigen Bearbeitungs- und/oder Fertigungsvorgängen die Prozessergebnisgrößen bestimmt und zusammen mit den Prozesszielgrößen und Prozessparametern gespeichert werden.

10. Vorrichtung zur Durchführung des Verfahrens nach einem der Ansprüche 1 bis 9, **dadurch gekennzeichnet, dass** sie eine Speichereinrichtung für die gespeicherten Daten, Einrichtungen zum Eingeben der Prozesszielgrößen, einen Rechner zum Bestimmen der Prozessparameter und Einrichtungen zum Einstellen derselben aufweist.

Arbeitszelle

Blechschalen

Punktschweißvorrichtung

Ladevorrichtung
aus
Roboter
und
Ansaugeinheit

Haltevorrichtung

Handhabungsvorrichtung
(Roboter)

FIGUR 1

→ Austausch von Beschreibungsdokumenten
← - - - - - → Austausch von Synchronisationssignalen

FIGUR 2

EP 2 133 766 A1

FIGUR 3

FIGUR 4

FIGUR 5

**Aufgabendaten:**
Beschreibung von Aufgaben als Anwendungsdaten ausgedrückt

**Aufgabenmerkmale:**
Prozessorientierte Aufgabenbeschreibung, die die Formulierung von Aufgabenähnlichkeitsmaßnahmen ermöglicht

**Bekannte Gesetze** (Formeln), wie z.B. Skalierungsgesetze oder -regeln werden auf die Merkmale angewandt, um Merkmale umzuwandeln oder neue Merkmale zu berechnen

**Ähnlichkeitserweiterung:**
Die Aufgabenmerkmalspunkte auf volumenähnliche Aufgaben erweitern

FIGUR 6

Europäisches
Patentamt

European
Patent Office

Office européen
des brevets

# EUROPÄISCHER RECHERCHENBERICHT

**Nummer der Anmeldung**

EP 09 00 7571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Norbert Link, Michael Peschl: "The Experton Production Technology Concept"<br><br>6. Dezember 2006 (2006-12-06), XP002548428 Karlsruhe, Germany<br>Gefunden im Internet:<br>URL:http://www.iwi.hs-karlsruhe.de/~lino0001/XPRESSProjectGoals2006.pdf><br>[gefunden am 2009-10-01] | 1-2,4-7, 10 | INV.<br>G05B19/418 |
| Y | * das ganze Dokument *<br>----- | 3,8-9 | |
| X | EP 1 217 482 A2 (MORI SEIKI SEISAKUSHO KK [JP]; INTELLIGENT MFG SYS INT [US])<br>26. Juni 2002 (2002-06-26) | 1,10 | |
| Y | * das ganze Dokument *<br>----- | 2-9 | |
| X | EP 1 065 029 A1 (OKUMA MACHINERY WORKS LTD [JP]; MORI SEIKI SEISAKUSHO KK [JP]; MITUTO) 3. Januar 2001 (2001-01-03) | 1,10 | |
| Y | * das ganze Dokument *<br>----- | 2-9 | RECHERCHIERTE SACHGEBIETE (IPC) |
| Y | Hochschule Karlsruhe - Technik und Wirtschaft: "EU Forschungsprojekt XPRESS - Entwicklung neuartiger Produktionstechnik unter Wissenschaftlicher Leitung der Hochschule Karlsruhe - Technik und Wirtschaft"<br><br>12. März 2008 (2008-03-12), XP002548431 Karlsruhe, Germany<br>Gefunden im Internet:<br>URL:http://www.hs-karlsruhe.de/servlet/PB/menu/1065336_I1/index.html><br>[gefunden am 2009-10-01]<br>* das ganze Dokument *<br>----- | 1-10 | G05B |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 15. Oktober 2009 | Patsiopoulos, N |

Europäisches Patentamt

European Patent Office

Office européen des brevets

# EUROPÄISCHER RECHERCHENBERICHT

**Nummer der Anmeldung**

EP 09 00 7571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Ditmar Zettel, Daniel Sampaio, Norbert Link, Michael Peschl, Heli Junno, Perttu Laurinen, Eija Haapalainen, Lauri Tuovinen, et al.: "Resistance Spot Welding Process Identification and Initialization based on Self-Organizing Maps" 9. Juni 2004 (2004-06-09), 1st International Conference on Informatics in Control, Automation and Robotics (ICINCO 2004) , Portugal , XP002548437 * das ganze Dokument * ----- | 1-10 | |
| A | Heli Juno, Pertuu Laurinen, Eija Haapalainen, Lauri Tuovinen Juha Röning: "Resistance Spot Welding Process Identification using an Extended knn Method" 16. März 2005 (2005-03-16), The IEEE International Symposium on industrial Electronics, 2005 , Croatia , XP002548438 * das ganze Dokument * ----- | 1-10 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 15. Oktober 2009 | Patsiopoulos, N |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

## EP 2 133 766 A1

**ANHANG ZUM EUROPÄISCHEN RECHERCHENBERICHT
ÜBER DIE EUROPÄISCHE PATENTANMELDUNG NR.**

EP 09 00 7571

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 1217482 | A2 | 26-06-2002 | JP | 2002189510 A | 05-07-2002 |
| | | | US | 2002082742 A1 | 27-06-2002 |
| EP 1065029 | A1 | 03-01-2001 | WO | 0038881 A1 | 06-07-2000 |
| | | | US | 6591156 B1 | 08-07-2003 |

EPO FORM P0461